# EUROPEAN PATENT SPECIFICATION

(11) **EP 2 601 117 B1**
(45) Date of publication and mention of the grant of the patent: **07.01.2015**
(21) Application number: 11749945.9
(22) Date of filing: 02.08.2011
(51) Int. Cl.: B65G 1/04

(54) **STORAGE AND ORDER COLLECTION SYSTEM**
SYSTEM ZUR LAGERUNG UND KOMMISSIONIERUNG
SYSTÈME DE COLLECTE DE COMMANDES ET DE STOCKAGE

(30) Priority: 03.08.2010 NL 1038148
(43) Date of publication of application: 12.06.2013
(73) Proprietor: i-Collector Holding B.V., 1327 CH Almere (NL)
(72) Inventor: DE VRIES, Hugo, Victor, NL-1327 CH Almere (NL)
(74) Representative: Ferguson, Alexander
(86) International application number: PCT/NL2011/000057
(87) International publication number: WO 2012/018255

(56) References cited:
- WO-A1-2010/090512
- GB-A- 1 389 221
- JP-U- H0 442 104

## Description

### BACKGROUND OF THE INVENTION

The invention relates to a storage and order collection- or order picking system. The invention furthermore relates to a method for storing articles, particularly including order picking.

Storage and order picking systems are among others used in wholesale businesses, such as the trade in (spare) parts, and in retail businesses, such as apothecaries and supermarket delivery services.

In a first known system use is made of a frame in which a number of rows and columns of elongated storage sections are accommodated, which are oriented perpendicular to the supply side and which each are provided with a belt conveyor on which articles can be placed by a carrier that can be moved up and down and along the supply side. When an article has to be added to a selected storage section the belt conveyor is shifted up one place and the article is placed on the vacated spot on the belt conveyor. The articles placed previously then are shifted up one step. When receiving more than one article the belt conveyor is moved back in steps and the carrier picks up said articles. They are then taken to a collection location by the carrier, for putting the desired order together. A shortcoming of this system is the low speed. Furthermore the known system with drives for all belt conveyors of storage sections is complex and failure prone. When the depth of the system should be kept limited, more storage sections are required and the distances of movement for the carrier become longer.

In another known system, racks are positioned transverse to the main path, separated from one another by a transverse path, in which a carrier can be moved up and down and reciprocally. The racks form elongated storage sections, extending parallel to the transverse path, and from there, that means transverse to the storage sections, they are accessible by the carrier. This system has large dimensions in transverse direction.

A device and a method according to the preambles of claims 1, 10 and 15 is known from JP H04 42 104 U.

### SUMMARY OF THE INVENTION

It is an object of the invention to provide a storage- and order picking system and -method that is able to function at high speed.

It is an object of the invention to provide a storage- and order picking system and -method that is able to function advantageously.

It is an object of the invention to provide a storage- and order picking system and -method that is able to function with a low risk of failure.

For achieving at least one of those objects, from one aspect, the invention provides a device for the storage of articles and the formation of groups of articles therefrom, comprising a frame having a first series of mutually parallel elongated storage sections, preferably positioned in a column set-up, that extend between a first end and a second end of the frame, furthermore comprising a number of holders, such as carriers, for the articles, wherein the storage sections are provided with holder supports on which a number of the holders can be supported for storage of the articles, wherein at the first end and the second end of the frame first and second platforms, respectively, have been arranged which each are adapted for accommodating at least one holder, and first movement means for moving said platforms, preferably simultaneously, from the one storage section to another storage section, wherein the device is provided with second movement means for horizontally moving at least one holder from the platform at the first end of the frame to the holder supports of a selected storage section while moving one or more holders, preferably representing a same holder length, from the selected storage section to the platform at the second end of the frame, wherein the device has main or longitudinal sides extending between the frame ends and at least at one longitudinal side is provided with one or more feeder devices and with third movement means for discharging an article from the feeder device to a selected storage section, wherein the device is provided with fourth movement means for moving the feeder device to the selected storage section.

The storage sections can be adapted for allowing a movement of the articles held by the holders thereof in a direction transverse to the storage section in question for discharge and/or accommodation of articles to or from, respectively, the device. The entry can then take place at the other side of the device than the output/exit.

By means of the invention a (storage) section can be used for the entry as a result of which the compactness is increased. Said entry section may for instance be used for assembling groups of (different) articles, in a process of order picking.

Advantageous embodiments are described in the attached claims 2-9 the contents of which should be considered inserted herein.

The entry and/or discharge need not conflict with the movement of articles from the one section to the other section in the device. Here, the platforms only need to be moved either up and down or reciprocally along both ends, as a result of which the profile of movement can be kept limited. The said holder length is the length that one or more holders take up considered in direction of the storage section in question. The storage section can remain, occupied with holders over the full length. When accommodating a holder in a storage section, a holder is also discharged at the other end.

The speed can be enhanced when both platforms are adapted for supporting more than one holder.

The device can be further simplified when the second movement means are provided on the first and/or the second platform. One or two such platforms can then suffice.

In one embodiment the second movement means directly engage onto a holder at the end of the row of holders that is situated on the storage level with both platforms. In a simple embodiment the second movement means engage onto a holder that is situated on a platform, particularly are designed as a pusher. By pushing the holder on the one platform onto the storage level, the holder at the other end is pushed onto the other platform.

According to a further aspect, the invention provides a method for keeping articles in store/discharging articles and/or order picking of articles, wherein the articles are stored in a device, which device comprises a frame having a first series of elongated storage sections placed parallel to each other, preferably in a column set-up, and extending between a first end and a second end of the frame, furthermore comprising a number of holders for the articles, wherein the storage sections are provided with holder supports on which a number of the holders can be supported for storage of the articles, wherein at a longitudinal side of the frame articles are taken to a selected storage section by a vertically movable feeder device, in particular to a selected holder in the selected storage section by a horizontally and vertically movable feeder device, and are supplied thereto, in a direction transverse to the longitudinal direction of the storage section, wherein for discharging selected stored articles from the device, the holders holding those articles are moved to a longitudinal end of the frame and at that location are taken by a platform to a storage section intended for discharge (discharge or exit section) and are transferred thereto, wherein the articles are transferred from the discharge section, particularly transverse to the longitudinal side, to an output device.

Preferably at the first end and the second longitudinal end of the frame, a first and a second, respectively, movable platform has been arranged, wherein for retrieving the articles from store, the first platform and the second platform are taken to a selected storage section and an empty holder is received from the second platform on the holder supports of said storage section while discharging a holder with article from said storage section to the first platform, after which the holder with article is taken by the first platform to the discharge section, where the holder in question is received from the first platform onto the holder supports of the discharge section while transferring an empty holder from the same section to the second platform.

These methods can be further developed with the measures described in claims 12-14, the contents of which should be considered inserted herein.

From a further aspect the invention provides a method for keeping articles in store, wherein the articles are stored in a device, which device comprises a frame having a first series of elongated storage sections placed parallel to each other, preferably in a column set-up, and extending between a first end and a second end of the frame, furthermore comprising a number of holders for the articles, wherein the storage sections are provided with holder supports on which a number of the holders can be supported for storage of the articles, wherein at a longitudinal side of the frame articles are taken to a storage section designed as entry section and are supplied thereto, in a direction transverse to the longitudinal direction of the entry section, wherein for storing entered articles in a selected storage section of the device, the holders holding those articles are moved to a longitudinal end of the frame and at that location are taken by a platform to the selected storage section and are transferred thereto, wherein the articles are transferred from the storage section to an output device, preferably in a direction transverse to the longitudinal direction of the storage section, wherein the articles from the storage section are received by an output device that is vertically and/or horizontally moved along the storage sections, between a selected position for reception of an article and a location of output.

In the storage device there are at least two storage sections that can be approached from the side, transverse to the longitudinal direction of the storage sections, as a result of which products can be entered and discharged. In order to easily be able to place and remove products in one embodiment the product carriers are only provided with a transversely oriented raised front and rear side.

### BRIEF DESCRIPTION OF THE DRAWINGS

The invention will be elucidated on the basis of a number of exemplary embodiments shown in the attached drawings, in which:
Figures 1A-C schematically show a front view, top view and side view, respectively, of an exemplary embodiment of a storing device for use with the invention;
Figures 2A and 2B show a side view of a process of storing articles in the device of figures 1A-C and a process of order picking in the device of figures 1A-C, respectively;
Figures 3A-C show some details of an example of a process of transferring articles within a storing device;
Figures 4A-C show a number of examples of use of an alternative embodiment of holders for a storing device;
Figure 5 shows a schematic top view of a comparable exemplary embodiment of a storing device; and
Figures 6A-C show an embodiment of a storing device according to the invention.

### DETAILED DESCRIPTION OF THE DRAWINGS

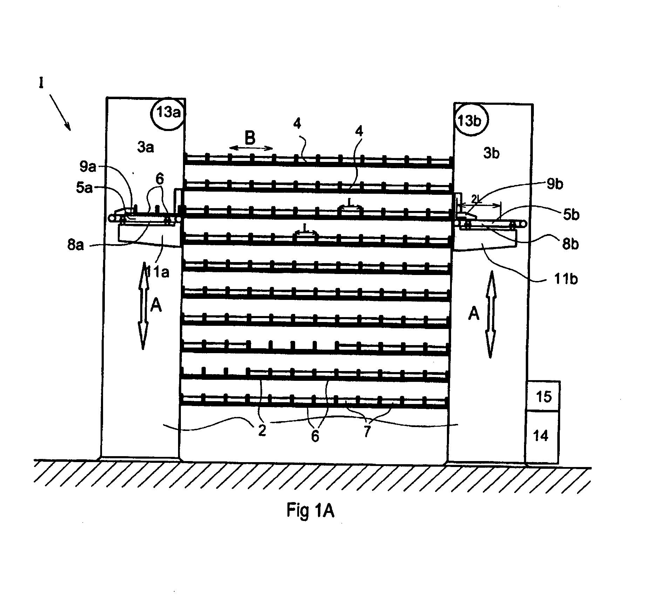

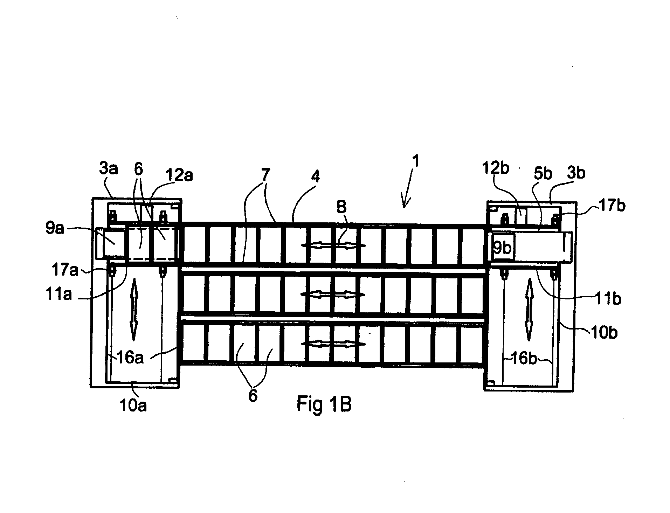

The exemplary embodiment 1 shown in figures 1A-C is substantially column-shaped and comprises a frame 2 having two elevator shafts 3a,3b at two longitudinal ends and storage sections borne in between them, in this case storage levels 4, in this example nine, which in this example are positioned in three columns. In each elevator shaft 3a,b a platform 5a,b is accommodated, which can be moved up and down by electromotors 13a,b, direction A. In the device 1 a number of carriers or holders for articles are housed.

Each platform 5a,b is supported on a frame 11a,b and comprises a belt conveyor 8a,b that is drivable by means of electromotors 12a,b. On the belts 8a,b pushers 9a,b are attached for movement along with them. The belts 8a,b have a support surface of approximately 2L, wherein L is the length of a holder 6, measured in main direction of a storage level 4, in this example corresponding with a module size.

The frames 11a,b with platforms 5a,b are supported on a frame 10a,b by wheels 17a,b and can be moved in the direction C over rails 16a,b by means of electromotors, not shown, provided on the platforms.

Each storage level 4 comprises two support profiles 7, on which a series of holders 6 is supported, in a way so as to be easily shiftable in the direction B. The support profiles 7 have a support length of approximately a full number of lengths L of the holder 6, in this example 12L.

For controlling the said electromotors a control unit 14 with programmable computer 15 is present.

The holders 6 are provided with unique identification marks, such as a barcode. For reading the barcodes sensors are present, that are functionally connected to the control unit 14/computer 15. In the control unit 14 a connection can be made between a holder and an article placed thereon, so that it is exactly known at what location in the device an article is situated and which article it is.

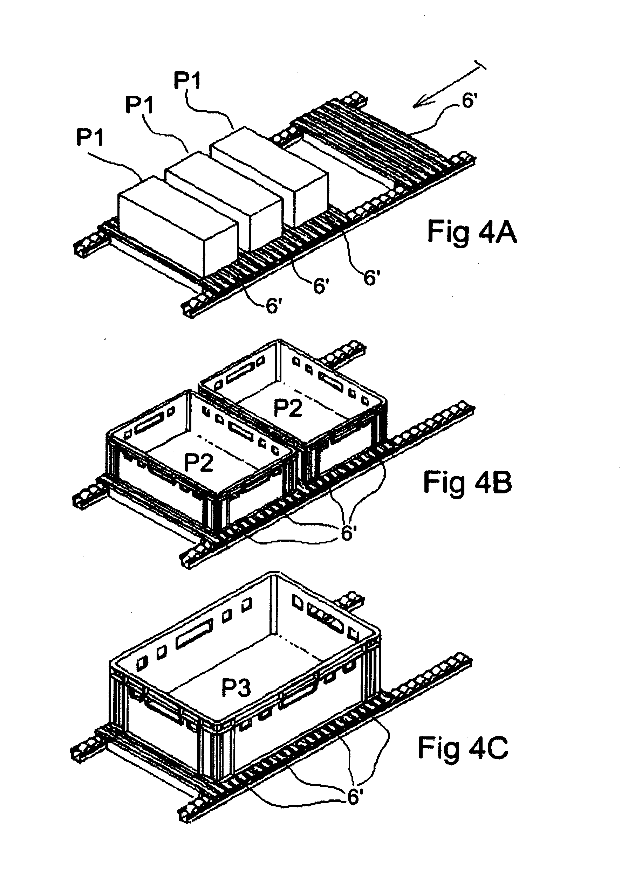

One of the storage sections 4 can be suitable for entry, for instance level 4a, and one for exit for instance level 4b. The entry level 4a and the exit level 4b can be situated at opposite main sides of the device 1, so that the direction of entry V can be the same as the direction of exit T, see figure 4. The entry and exit levels are situated at a level, which to a person involved in entering/outputting, is ergonomically advantageous.

When storing a group of identical articles Pi the articles are placed in the direction V on or in the holders 6 of entry level 4a. The platforms 5a,b have been taken to the same level and in line with the entry level 4a. After loading the belt 8b is activated. On the belt 8b there are two empty holders 6, on belt 8a none, so that the overall number of holders on platforms and storage levels is 3 x 9 x 12 + 2. The pusher 9b pushes said holders 6 at the right-hand side onto the support profiles 7 of the entry level. Said pushing force is transferred via the holders 6 of said level to the two leftmost holders 6 that are each carrying an article Pi. All holders 6 thus shift onwards to the left, while discharging the two loaded holders 6 to the belt 8a, direction D2. The belt 8a can then be idle or be driven synchronously.

After both holders 6 are positioned on the belt 8a, the platforms 5a,b are lifted, direction E, to the selected storage level 4. When the latter is situated in a different column movement will also take place in the direction C.

When the platforms 5a,b have come to be in line with the selected storage level 4, the belt 8a is activated in order to urge the loaded holders 6 by means of pusher 9a to the right, direction F1, onto the support profiles 7 of said level. As a result at the right-hand end two empty holders 6 are shifted onto the belt 8b, in a comparable manner as described above for the left-hand end. After the loaded holders have been discharged the platforms 5a,b can be moved downwards again, direction G, in order to be brought in line again with entry level 4a, after which the same process can start over again. This can be repeated as long as there are still empty holders at the selected storage level. After that another storage level can be used.

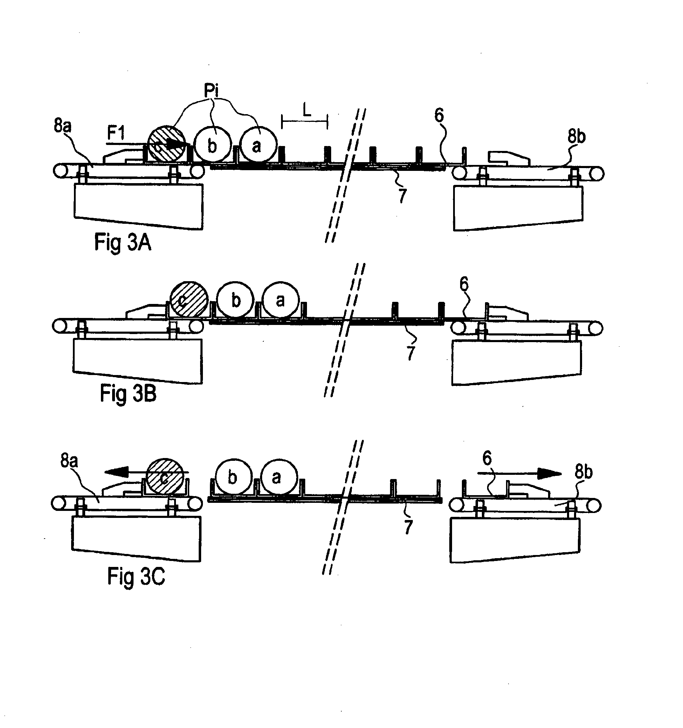

When the articles Pi are different and for that reason have to be stored at different storage levels, platform 5a will be used for first discharging one article Pi to the one selected storage level, and subsequently the next, different article on another selected storage level. This is for instance shown in figures 3A-C, where the article b is discharged to a storage level, but a different article c is still kept on the belt 8a. As shown, at the end of discharging, the belts 8a,b can be driven in a slightly opposite manner, in order to make the holder 6 with article c and the empty holder on belt 8b entirely free from the storage level, before moving the platforms 5a,b.

It is also possible to assign storage levels to certain destinations. In that case for instance identical articles Pi can be distributed over different levels. Other, different articles Pi can then be distributed over the same levels, or over a part thereof. Thus on each assigned level an individual collection of articles is brought together, also grouped.

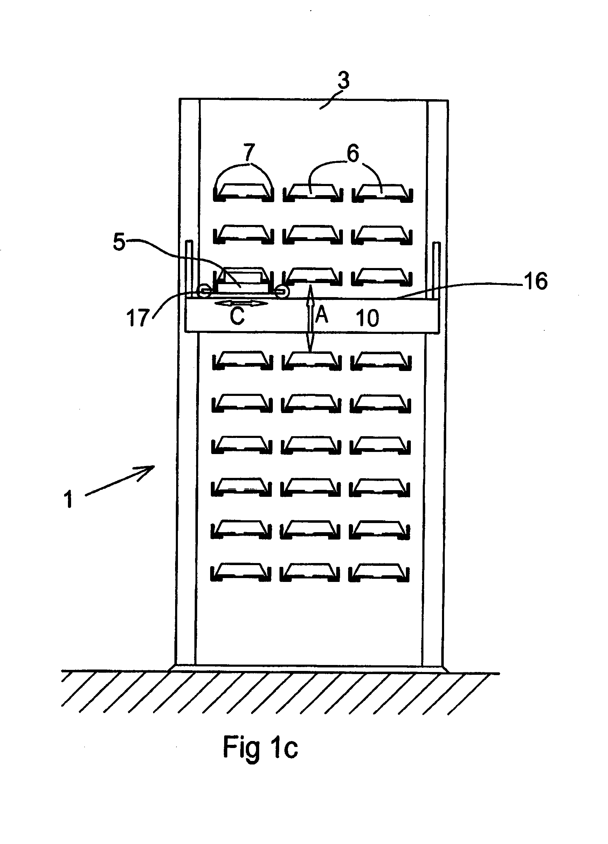

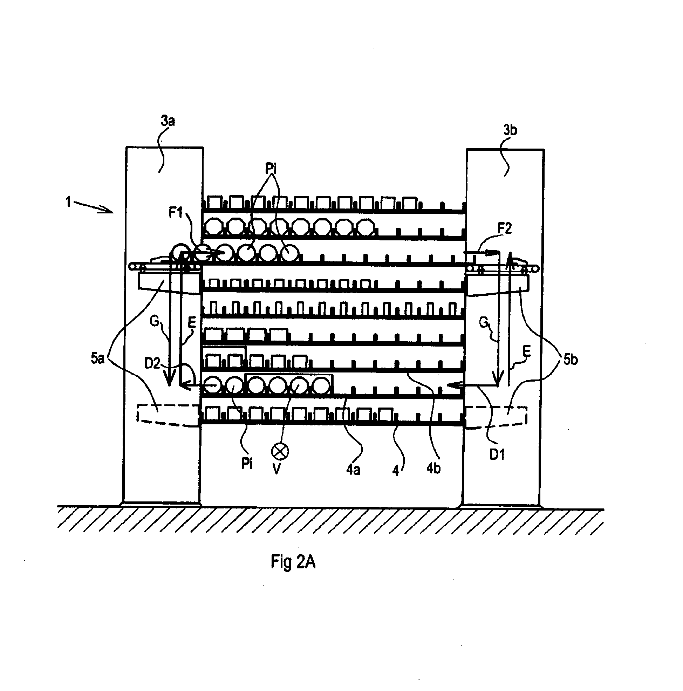

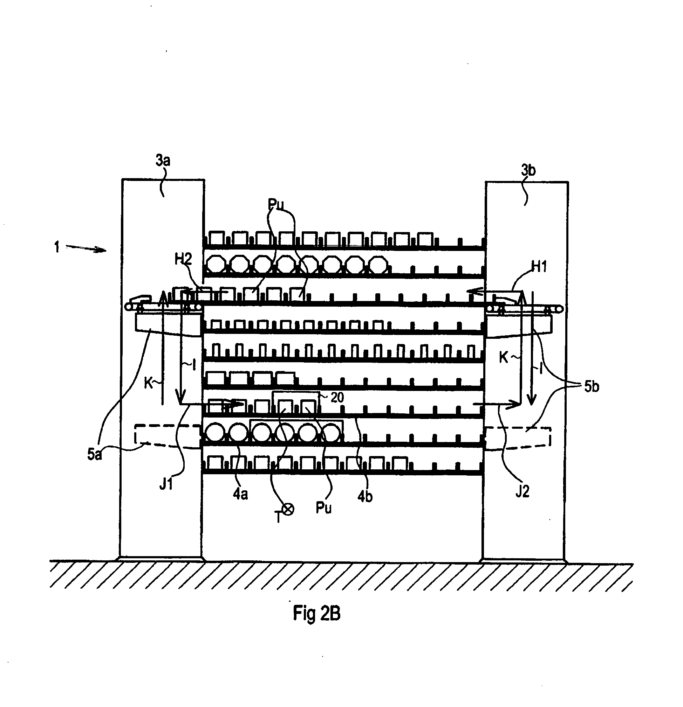

For picking an order of for instance articles Pu the platforms 5a,b are brought in line with the selected storage level 4 (figure 2B). Belt 8b is subsequently driven in order to push the empty holders 6 on it to the left, direction H1, by means of pusher 9b. As a result thereof at the left-hand end, two loaded holders 6 are urged onto the belt 8a, direction H2. Subsequently the platforms 5a,b are moved downwards, direction I, until they are in line, optionally after movement in direction C (figure 1C), with exit level 4b. At that location the belt 8a is activated, so that by means of the pusher 9a two loaded holders 6 are urged in the direction J1 onto the support profiles 7 of the exit level 4b. As a result thereof at the right-hand end two empty holders 6 are pushed onto the belt 8b, direction J2. After the loaded holders have been transferred to the exit level 4b the platforms 5a,b can be moved upwards again, direction K, in order to be brought in line again with the level where the articles have to be removed, after which the same process can start over again.

When the order is ready, or room has to be made, the articles Pu can be removed in the direction T from the exit level 4b, via passage 20.

It is also possible to make an order of different articles, for which purpose articles are taken from different storage levels in the described manner and are placed on the exit level.

In the aforementioned case of grouping articles on assigned levels the collection has already taken place and for instance the entire group can be transferred in steps from one level to the exit level.

It is noted that instead of being loaded with singular articles, the holders can also be loaded with a multiple of articles, or a combination of articles, for instance a package of medicines customized to a patient.

It is furthermore noted that the holders 6 can also be designed so as to be multiple, having multiple compartments.

For facilitating in a direction transverse to the main direction of a storage section the holders can be substantially U-shaped, wherein the legs form upright edges or walls that are transverse to said main direction.

In an embodiment, see figures 4A-C, it is also possible to use holders 6' that do not have upright walls or edges that are transverse to the main direction, and as shown, merge into each other with their support surfaces. An advantage thereof is that adjacently situated holders are able to provide a large support surface, as a result of which articles that are larger than one holder can also be handled. In figure 4A the holders 6' each carry one article, a box P1, in figure 4B four holders 6' together carry two crates P2, in figure 4C the four holders 6' together carry one larger crate P3. In the cases of figures 4B and 4C the platforms will be adapted thereto as regards length.

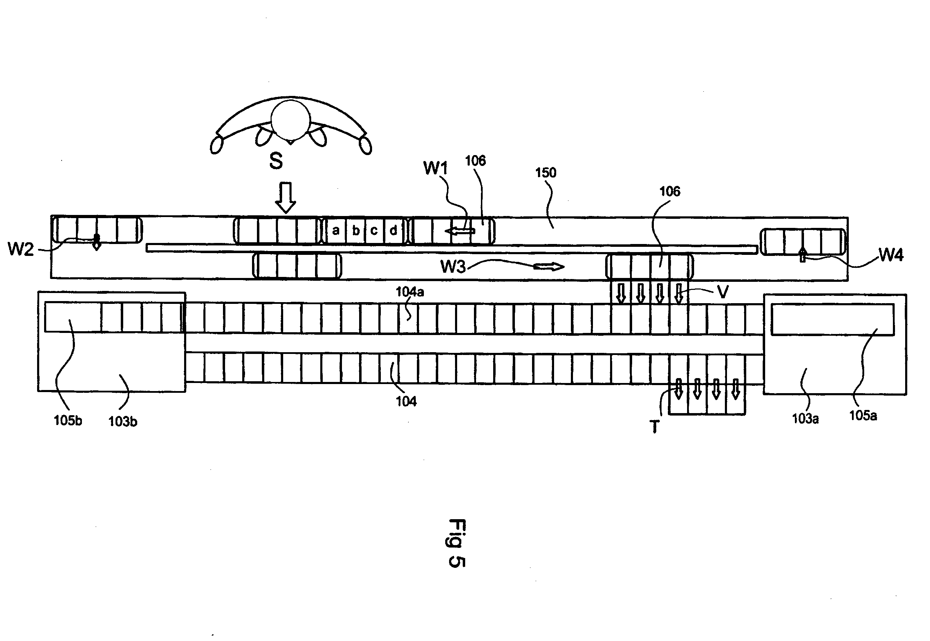

To illustrate the supply, in figure 5 in front of the device 101, which in principle corresponds with device 1, a supply conveyor 150 is positioned, on which multiple holders 106 with four compartments a-d. The filler places the articles (direction S) in an empty holder 106 that arrives in direction W1. The loaded holder 106 runs, directions W2, W3, to the location of entry, where an ejector that is not shown delivers the articles in the direction V to a holder 106 on the entry level 104a. In the manner described above, said holder 106 later ends up on platform 105a, which in this example by way of example is adapted for supporting one holder 106.

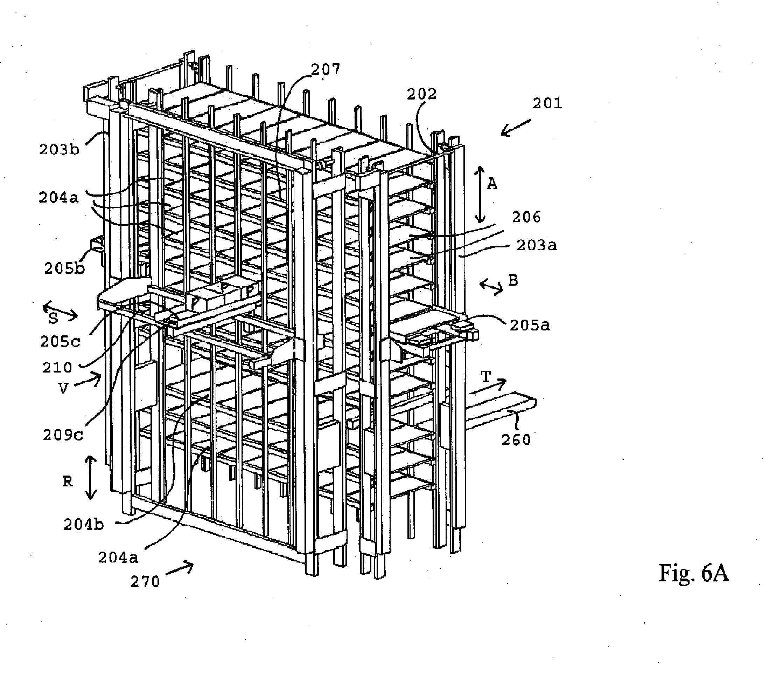

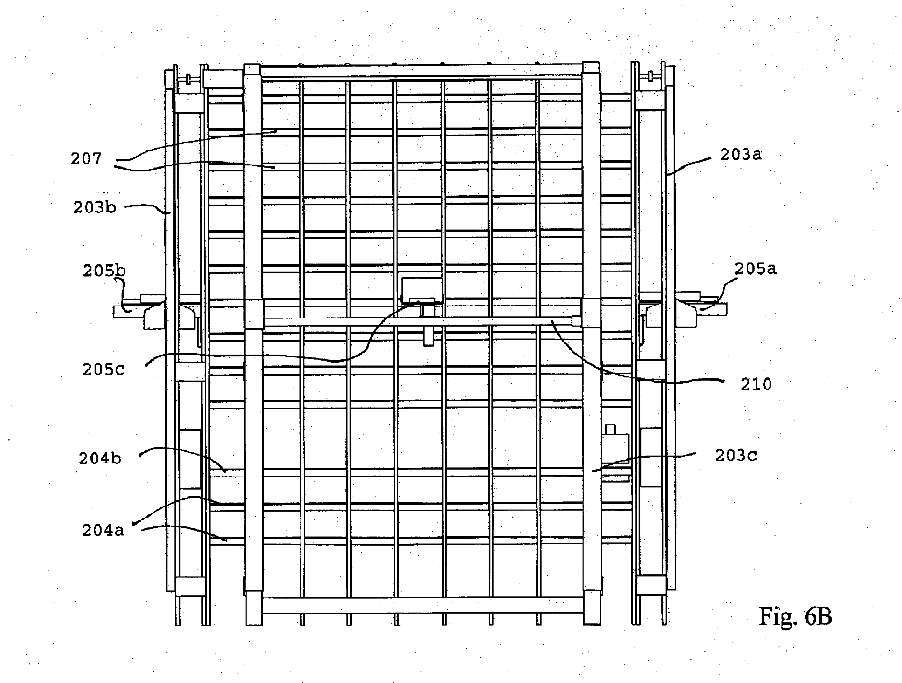

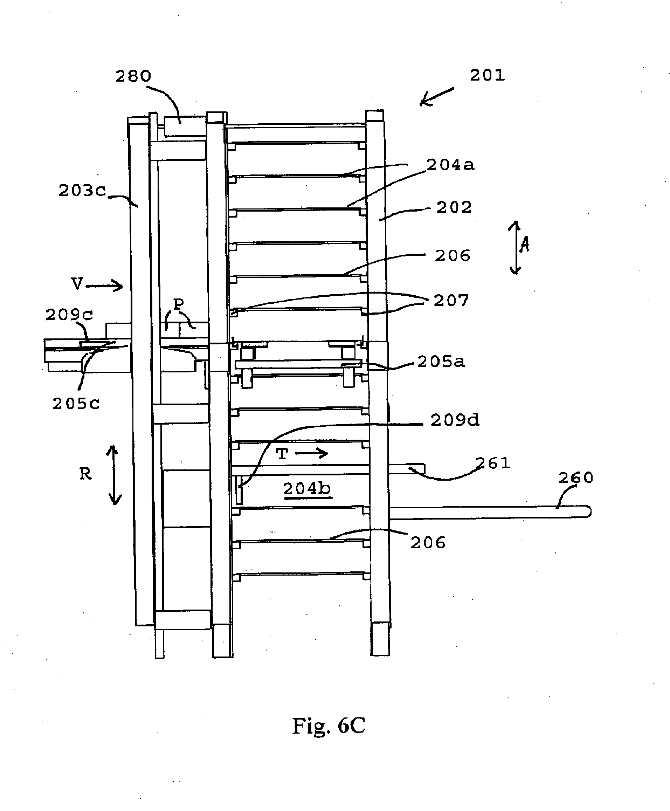

The exemplary embodiment 201 of a device according to the invention shown in figures 6A-C, comprises a frame 202 in which in a column set-up a number of sections 204 are housed. The majority of the sections 204 is storage section 204a, which in principle correspond with the storage sections discussed above and comprise support profiles 207 extending in longitudinal direction on which a series of holders 206 is supported, in an easy slidable manner.

Elevator shafts 203a,b have been arranged at both longitudinal sides, in which shafts, in the manner discussed above, platforms 205a,b can be moved up and down (direction A) by first movement means. The platforms 205a,b correspond with the platforms discussed above including drive.

At one longitudinal side, the front side, an entry device 270 is provided, comprising an elevator shaft 203c, in which a feeder device 205c is movable by fourth movement means, and namely movable up and down (direction R), by motor 280. The feeder device 205c can also be moved in longitudinal direction (direction S) on rails 210 by the fourth movement means, by means of a motor that is not shown.

The feeder device 205c is provided with a pusher 209c (third movement means) with which articles P supported by the feeder device 205c can be moved in the (entry) direction V.

One of the sections 204 is adapted as discharge or exit section 204b. Another option is designing several of the sections 204 like that. In the frame 202, at the location of the discharge section 204b a pusher or ejector 209d (fifth movement means) is provided, which is guided by guides 261 and is able to move articles P supported on a holder 206 situated there in said section in the direction T, in order to transfer them to output device 260, which is situated at the rear of the frame 202. Alternatively it is also possible to unload several holders 206 simultaneously, in which case several ejectors or pushers 209d are present and the output belt will be broader or an output belt that extends along the discharge section 204b.

All drives are controlled by a control unit, which is not shown, with programmable computer.

In use supplied articles P that have to be stored are placed on the feeder device the platform 205c of the entry device 270, and by movement in the directions R and S are brought in front of the correct storage section 204a at the location of the correct holder 206. Subsequently the ejector 209c is operated and the article P or the articles P are shifted onto the selected holder 206. Depending on the relative dimensions of article P with respect to the length and width of the holder, several articles can be placed adjacent to each other (in latitudinal direction or in longitudinal direction) on a holder. In the example three articles P are shifted onto the holder 206.

When certain articles need to be delivered, platforms 205a,b are deployed. In a manner as discussed above the platforms 205a,b are brought in line with the storage section 204a in question, and one or more of its holders 206, loaded with the articles in question, are shifted onto (first) platform 205a in the manner discussed above. From the platform 205b the holders in said section are replenished. The platforms 205a,b are subsequently brought into line with discharge section 204b, and in the manner discussed above the loaded holders 206 are transferred to said section, wherein the empty holders are received by the second platform.

These actions are repeated/continued until the discharge section 204b is filled as desired. An assortment of articles can also be made, originating from different storage sections.

Then the ejectors or slides 209d are operated, which move along guides 261 and shift the articles P onto the output device 260, direction T.

In this case the holders 206 are substantially free from (without) threshold or something similar at the longitudinal side of the frame, in order to be able to be freely accessible to an article moving in transverse direction V or T.

It is noted that the device 201 and comparable devices according to the invention can also be designed the other way round, in which case one or more sections (such as 204b) are designed as entry section and the platforms at the longitudinal ends are used for distribution over the storage sections. The ejectors, such as ejectors 209d, may in that case have been replaced by for instance pulls or hooks, in order to pull in the articles. The discharge can then take place by means of an output device that is similar to the feeder device but works the other way round. Instead of the ejector provided thereon, for instance a pull or hook may be present, which pulls the articles from a holder onto the platform. Other displacers are possible to effect the desired movements.

The above description is included to illustrate the operation of preferred embodiments of the invention and not to limit the scope of the invention. Starting from the above explanation many variations that fall within the scope of the present invention as defined by the claims will be evident to an expert.

## Claims

1. Device (201) for the storage of articles (P) and the formation of groups of articles therefrom, comprising a frame (202) having a first series of mutually parallel elongated storage sections (204), preferably positioned in a column set-up, that extend between a first end and a second end of the frame, furthermore comprising a number of holders (206), such as carriers, for the articles, wherein the storage sections are provided with holder supports (207) on which a number of the holders can be supported for storage of the articles, wherein at the first end and the second end of the frame first and second platforms (205a,b), respectively, have been arranged which each are adapted for accommodating at least one holder, and first movement means (203a,b) for moving said platforms, preferably simultaneously, from the one storage section to another storage section, wherein the device is provided with second movement means (12a,b) for horizontally moving at least one holder from the platform at the first end of the frame to the holder supports of a selected storage section while moving one or more holders, preferably representing a same holder length, from the selected storage section to the platform at the second end of the frame, **characterized in that** the device has main or longitudinal sides extending between the frame ends and at least at one longitudinal side is provided with one or more feeder devices (205c) and with third movement means (209c) for discharging an article from the feeder device to a selected storage section, wherein the device is provided with fourth movement means (280) for moving the feeder device to the selected storage section.

2. Device according to claim 1, wherein the third movement means (209c) are provided on the feeder device (205c), preferably as a displacer, such as an ejector, provided on the feeder device for discharging and/or receiving the article (P) to and from, respectively, the selected storage section (204a), in particular to and from a holder in the selected storage section, which displacer preferably is active in a horizontal direction transverse to the longitudinal direction of the storage section, wherein, preferably, the displacer engages onto the article.

3. Device according to claim 1 or 2, wherein the fourth movement means (280) are able to move the feeder device (205c) up and down and/or reciprocally along the longitudinal side to a selected holder (206) in a selected storage section (204a).

4. Device according to any one of the preceding claims, wherein the device is provided with several feeder devices (205c) at a same longitudinal side, wherein the third and fourth movement means (209c;280) of said feeder devices preferably can be operated independent from each other.

5. Device according to any one of the preceding claims, wherein on at least one of the longitudinal sides of the frame the holders (206) are freely accessible to an article (P), wherein, preferably, the holders on both longitudinal sides of the frame are freely accessible to an article.

6. Device according to any one of the preceding claims, wherein the one longitudinal side of the frame (202) forms the entry side and the opposing longitudinal side the exit side.

7. Device according to any one of the preceding claims, wherein, at one or more storage sections, which are exit or discharge sections, (204a;204b) the device is provided with fifth movement means (209d) for removing an article (P) from the storage section in question, preferably in the form of one or more displacers, such as ejectors, that preferably engage onto the article.

8. Device according to claim 7, wherein the third movement means (209c), the fifth movement means (209d), the feeder device (205c) and an output device 260) are designed to be active the other way round so that the feeder device forms an output device and the discharge section forms an entry section.

9. Device according to any one of the preceding claims, provided with a programmable control system for controlling the first (203c), second (12a,b), third (209c) and fourth (280), and if present fifth (209d), movement means, wherein, preferably, the control system is programmed for having the articles (P) moved exclusively by the first platform 205a) past the ends of the storage sections, and/or the control system is programmed for having the second platform (205b) exclusively move empty holders.

10. Method for keeping articles in store, wherein the articles (P) are stored in a device (201), which device comprises a frame (202) having a first series of elongated storage sections (204) placed parallel to each other, preferably in a column set-up, and extending between a first end and a second end of the frame, furthermore comprising a number of holders (206) for the articles, wherein the storage sections are provided with holder supports (207) on which a number of the holders can be supported for storage of the articles, **characterized in that** at a longitudinal side of the frame articles are taken to a selected storage section (204a) by a vertically movable feeder device, in particular to a selected holder in the selected storage section by a horizontally and vertically movable feeder device (205c), and are supplied thereto, in a direction transverse to the longitudinal direction of the storage section, wherein for discharging selected stored articles from the device, the holders holding those articles are moved to a longitudinal end of the frame and at that location are taken by a platform (205a;205b) to a storage section intended for discharge, that is a discharge or exit section, and are transferred thereto, wherein the articles are transferred from the discharge section to an output device (260).

11. Method according to claim 10, wherein at the first longitudinal end and at the second longitudinal end of the frame (202) a first and a second movable platform (205a,205b), respectively, has been arranged wherein for retrieving the articles from store, the first platform and the second platform are taken to a selected storage section (204a) and an empty holder (206) is received from the second platform on the holder supports (207) of said storage section while discharging a holder with article from said storage section to the first platform, after which the holder with article is taken by the first platform to the discharge section, where the holder in question is received from the first platform onto the holder supports of the discharge section while transferring an empty holder from said same section to the second platform.

12. Method according to claim 10 or 11, wherein in transverse direction several, preferably identical articles (P), are placed adjacent to each other on a holder (206) in the selected storage section (204a).

13. Method according to any one of the claims 10-12, wherein the articles (P) are discharged from the discharge section, preferably in a direction transverse to the longitudinal direction of the discharge section, by means of dischargers (209d), such as ejectors, arranged in the frame active at the location of the holder in question, wherein, preferably, the longitudinal side of entry is opposed to the longitudinal side of the discharge/exit.

14. Method according to any one of the claims 10-13, wherein the supplied articles are placed in different storage sections (204a), particularly in accordance with the type or the intended use of the articles, and/or articles from different storage sections are brought together in the discharge section (204b).

15. Method for keeping articles in store, wherein the articles (P) are stored in a device (201), which device comprises a frame (202) having a first series of elongated storage sections (204) placed parallel to each other, preferably in a column set-up, and extending between a first end and a second end of the frame, furthermore comprising a number of holders (206) for the articles, wherein the storage sections are provided with holder supports (207) on which a number of the holders can be supported for storage of the articles, **characterized in that** at a longitudinal side of the frame the articles are taken to a storage section designed as entry section (204b) and are supplied thereto, in a direction transverse to the longitudinal direction of the entry section, wherein for storing entered articles in a selected storage section of the device, the holders holding those articles are moved to a longitudinal end of the frame and at that location are taken by a platform (205a,205b) to the selected storage section and transferred thereto, the articles are transferred from the storage section to an output device in a direction transverse to the longitudinal direction of the storage section, wherein the output device is vertically and/or horizontally moved along the storage sections, between a selected position for reception of an article and a location of output.

## Patentansprüche

1. Vorrichtung (201), um Artikel (P) zu lagern und daraus Gruppen von Artikeln zu bilden, umfassend einen Rahmen (202) mit einer ersten Reihe von zueinander parallelen länglichen Lagerabschnitten (204), vorzugsweise in einer Säulenanordnung positioniert, die sich zwischen einem ersten Ende und einem zweiten Ende des Rahmens erstrecken, darüber hinaus umfassend eine Anzahl von Haltern (206), wie etwa Trägern, für die Artikel, wobei die Lagerabschnitte mit Halterstützen (207) versehen sind, worauf eine Anzahl der Halter zur Lagerung der Artikel getragen werden kann, wobei an dem ersten Ende und an dem zweiten Ende des Rahmens eine erste bzw. eine zweite Plattform (205a, b) angeordnet sind, die jeweils dazu geeignet ist, wenigstens einen Halter aufzunehmen, und erste Bewegungsmittel (203a, b), um die Plattformen, vorzugsweise gleichzeitig, von dem einen Lagerabschnitt zu einem anderen Lagerabschnitt zu bewegen, wobei die Vorrichtung mit zweiten Bewegungsmitteln (12a, b) versehen ist, um wenigstens einen Halter waagerecht von der Plattform an dem ersten Ende des Rahmens zu den Halterstützen eines gewählten Lagerabschnitts zu bewegen, während ein oder mehrere Halter, der bzw. die vorzugsweise eine gleiche Halterlänge (L) zeigt bzw. zeigen, von dem gewählten Lagerabschnitt zu der Plattform an dem zweiten Ende des Rahmens bewegt wird bzw. werden, **dadurch gekennzeichnet, dass** die Vorrichtung Haupt- oder Längsseiten aufweist, die sich zwischen den Rahmenenden erstrecken, und dass wenigstens eine Längsseite mit einer oder mehreren Zufuhrvorrichtungen (205c) und mit dritten Bewegungsmitteln (209c), um einen Artikel von der Zufuhrvorrichtung zu einem gewählten Lagerabschnitt abzugeben, versehen ist, wobei die Vorrichtung mit vierten Bewegungsmitteln (280) versehen ist, um die Zufuhrvorrichtung zu dem gewählten Lagerabschnitt zu bewegen.

2. Vorrichtung nach Anspruch 1, wobei die dritten Bewegungsmittel (209c) an der Zufuhrvorrichtung (205c) versehen sind, vorzugsweise als Verschiebeeinrichtung wie etwa ein Auswerfer, die an der Zufuhrvorrichtung versehen ist, um den Artikel (P) zu dem gewählten Lagerabschnitt (204a) und insbesondere zu einem Halter in dem gewählten Lagerabschnitt abzugeben und/oder davon zu erhalten, wobei die Verschiebeeinrichtung vorzugsweise in einer waagerechten Richtung quer zu der Längsrichtung des Lagerabschnitts aktiv ist, wobei die Verschiebeeinrichtung vorzugsweise an dem Artikel eingreift.

3. Vorrichtung nach Anspruch 1 oder 2, wobei die vierten Bewegungsmittel (280) fähig sind, die Zufuhrvorrichtung (205c) entlang der Längsseite auf und ab und/oder hin und her laufend zu einem gewählten Halter (206) in einem gewählten Lagerabschnitt (204a) zu bewegen.

4. Vorrichtung nach einem der vorhergehenden Ansprüche, wobei die Vorrichtung an einer gleichen Längsseite mit mehreren Zufuhrvorrichtungen (205c) versehen ist, wobei die dritten und vierten Bewegungsmittel (209c; 280) der Zufuhrvorrichtungen vorzugsweise unabhängig voneinander betrieben werden können.

5. Vorrichtung nach einem der vorhergehenden Ansprüche, wobei die Halter (206) an wenigstens einer der Längsseiten des Rahmens für einen Artikel (P) frei zugänglich sind, wobei vorzugsweise die Halter an beiden Längsseiten des Rahmens für einen Artikel frei zugänglich sind.

6. Vorrichtung nach einem der vorhergehenden Ansprüche, wobei die eine Längsseite des Rahmens (202) die Zugangsseite und die entgegengesetzte Längsseite die Ausgangsseite bildet.

7. Vorrichtung nach einem der vorhergehenden Ansprüche, wobei die Vorrichtung an einem oder mehreren Lagerabschnitten, die Ausgangs- oder Abgabeabschnitte (204a; 204b) sind, mit fünften Bewegungsmitteln (209d) zur Entnahme eines Artikels (P) aus dem fraglichen Lagerabschnitt, vorzugsweise in der Form einer oder mehrerer Verschiebeeinrichtungen wie etwa Auswerfern, die vorzugsweise an dem Artikel eingreifen, versehen ist.

8. Vorrichtung nach Anspruch 7, wobei die dritten Bewegungsmittel (209c), die fünften Bewegungsmittel (209d), die Zufuhrvorrichtung (205c) und eine Ausgabevorrichtung (260) so gestaltet sind, dass sie umgekehrt aktiv sein können, so dass die Zufuhrvorrichtung eine Ausgabevorrichtung bildet und der Abgabeabschnitt einen Zugangsabschnitt bildet.

9. Vorrichtung nach einem der vorhergehenden Ansprüche, die mit einem programmierbaren Steuersystem versehen ist, um die ersten (203c), zweiten (12a, b), dritten (209c) und vierten (280) und, falls vorhanden, fünften (209d) Bewegungsmittel zu steuern, wobei vorzugsweise das Steuersystem so programmiert ist, dass die Artikel (P) ausschließlich durch die erste Plattform (205a) an den Enden der Lagerabschnitte vorbei bewegt werden, und/oder das Steuersystem so programmiert ist, dass die zweite Plattform (205b) ausschließlich leere Halter bewegt.

10. Verfahren, um Artikel zu lagern, wobei die Artikel (P) in einer Vorrichtung (201) gelagert werden, wobei die Vorrichtung einen Rahmen (202) umfasst, der eine erste Reihe von länglichen Lagerabschnitten (204) aufweist, die parallel zueinander, vorzugsweise in einer Säulenanordnung positioniert, angeordnet sind und sich zwischen einem ersten Ende und einem zweiten Ende des Rahmens erstrecken, und darüber hinaus eine Anzahl von Haltern (206) für die Artikel umfasst, wobei die Lagerabschnitte mit Halterstützen (207) versehen sind, auf denen eine Anzahl der Halter getragen werden kann, um die Artikel zu lagern, **dadurch gekennzeichnet, dass** Artikel an einer Längsseite des Rahmens durch eine senkrecht bewegliche Zufuhrvorrichtung zu einem gewählten Lagerabschnitt (204a), insbesondere durch eine waagerecht und senkrecht bewegliche Zufuhrvorrichtung (205c) zu einem gewählten Halter in dem gewählten Lagerabschnitt, gebracht werden und in einer quer zu der Längsrichtung des Lagerabschnitts verlaufenden Richtung zu diesem geliefert werden, wobei zum Abgeben gewählter gelagerter Artikel von der Vorrichtung die Halter, die jene Artikel halten, zu einem Längsende des Rahmens bewegt werden und an jener Stelle durch eine Plattform (205a; 205b) zu einem Lagerabschnitt, der für die Abgabe bestimmt ist, das heißt, einem Abgabe- oder Ausgangsabschnitt, gebracht werden und zu diesem überführt werden, wobei die Artikel von dem Abgabeabschnitt zu einer Ausgabevorrichtung (260) überführt werden.

11. Verfahren nach Anspruch 10, wobei an dem ersten Ende in der Längsrichtung und an dem zweiten Ende in der Längsrichtung des Rahmens (202) eine erste bzw. eine zweite bewegliche Plattform (205a, 205b) angeordnet wurde, wobei zum Holen der Artikel aus dem Lager die erste Plattform und die zweite Plattform zu einem gewählten Lagerabschnitt (204a) gebracht werden und ein leerer Halter (206) von der zweiten Plattform auf den Halterstützen (207) des Lagerabschnitts aufgenommen wird, während ein Halter mit einem Artikel von dem Lagerabschnitt zu der ersten Plattform abgegeben wird, wonach der Halter mit dem Artikel von der ersten Plattform zu dem Abgabeabschnitt gebracht wird, wo der fragliche Halter von der ersten Plattform auf den Halterstützen des Abgabeabschnitts aufgenommen wird, während ein leerer Halter von dem gleichen Abschnitt zu der zweiten Plattform überführt wird.

12. Verfahren nach Anspruch 10 oder 11, wobei mehrere, vorzugsweise identische Artikel (P) in der Querrichtung nebeneinander auf einem Halter (206) in dem gewählten Lagerabschnitt (204a) angeordnet werden.

13. Verfahren nach einem der Ansprüche 10 bis 12, wobei die Artikel (P) durch Abgabeeinrichtungen (209d) wie etwa Auswerfer, die in dem Rahmen an der Stelle des fraglichen Halters aktiv angeordnet werden, vorzugsweise in einer Richtung, die quer zu der Längsrichtung des Abgabeabschnitts verläuft, von dem Abgabeabschnitt abgegeben werden, wobei vorzugsweise die Längsseite des Zugangs zu der Längsseite der Abgabe/des Ausgangs entgegengesetzt ist.

14. Verfahren nach einem der Ansprüche 10 bis 13, wobei die gelieferten Artikel -insbesondere je nach der Art oder dem Verwendungszweck der Artikel- in verschiedenen Lagerabschnitten (204a) angeordnet werden, und/oder Artikel von verschiedenen Lagerabschnitten in dem Abgabeabschnitt (204b) zusammengeführt werden.

15. Verfahren, um Artikel zu lagern, wobei die Artikel (P) in einer Vorrichtung (201) gelagert werden, wobei die Vorrichtung einen Rahmen (202) umfasst, der eine erste Reihe von länglichen Lagerabschnitten (204) aufweist, die parallel zueinander, vorzugsweise in einer Säulenanordnung positioniert, angeordnet sind und sich zwischen einem ersten Ende und einem zweiten Ende des Rahmens erstrecken, und darüber hinaus eine Anzahl von Haltern (206) für die Artikel umfasst, wobei die Lagerabschnitte mit Halterstützen (207) versehen sind, auf denen eine Anzahl der Halter getragen werden kann, um die Artikel zu lagern, **dadurch gekennzeichnet, dass** die Artikel an einer Längsseite des Rahmens zu einem als Zugangsabschnitt (204b) bestimmten Lagerabschnitt gebracht werden und in einer quer zu der Längsrichtung des Zugangsabschnitts verlaufenden Richtung zu diesem geliefert werden, wobei zur Lagerung eingebrachter Artikel in einem gewählten Lagerabschnitt der Vorrichtung die Halter, die diese Artikel halten, zu einem Ende in der Längsrichtung des Rahmens bewegt und an jener Stelle durch eine Plattform (205a, 205b) zu dem gewählten Lagerabschnitt gebracht und zu diesem überführt werden, und die Artikel in einer quer zu der Längsrichtung des Lagerabschnitts verlaufenden Richtung von dem Lagerabschnitt zu einer Ausgabevorrichtung überführt werden, wobei die Ausgabevorrichtung senkrecht und/oder waagerecht entlang der Lagerabschnitte zwischen einer gewählten Position für den Erhalt eines Artikels und einer Stelle für die Ausgabe bewegt wird.

## Revendications

1. Dispositif (201) pour le stockage d'articles (P) et la formation de groupes d'articles à partir de ceux-ci, comprenant un cadre (202) présentant une première série de sections de stockage allongées mutuellement parallèles (204) positionnées de préférence dans une disposition en colonnes, qui s'étendent entre une première extrémité et une deuxième extrémité du cadre, comprenant en outre un nombre de porteurs (206), tels que des éléments portants, pour les articles, dans lequel les sections de stockage sont pourvues de supports de porteur (207) sur lesquels un nombre des porteurs (6) peuvent être supportés pour le stockage des articles, dans lequel, à la première extrémité et à la deuxième extrémité du cadre, des première et deuxième plates-formes (205a;b), respectivement, ont été agencées et sont chacune adaptées pour recevoir au moins un porteur, et des premiers moyens de déplacement (203a,b) pour déplacer lesdites plates-formes, de préférence simultanément, à partir d'une première section de stockage jusqu'à une autre section de stockage, dans lequel le dispositif est pourvu de deuxièmes moyens de déplacement (12a,b) pour déplacer horizontalement au moins un porteur à partir de la plate-forme à la première extrémité du cadre jusqu'aux supports de porteur d'une section de stockage sélectionnée tout en déplaçant un ou plusieurs porteur(s) représentant de préférence une même longueur de porteur depuis la section de stockage sélectionnée jusqu'à la plate-forme à la deuxième extrémité du cadre, **caractérisé en ce que** le dispositif présente des côtés principaux ou longitudinaux qui s'étendent entre les extrémités du cadre, et au moins à un côté longitudinal sont prévus un ou plusieurs dispositif(s) d'introduction (205c) et des troisièmes moyens de déplacement (209c) pour décharger un article du dispositif d'introduction dans une section de stockage sélectionnée, dans lequel le dispositif est pourvu de quatrièmes moyens de déplacement (280) pour déplacer le dispositif d'introduction jusqu'à la section de stockage sélectionnée.

2. Dispositif selon la revendication 1, dans lequel les troisièmes moyens de déplacement (209c) sont prévus sur le dispositif d'introduction (205c), de préférence sous la forme d'un dispositif de déplacement, tel qu'un éjecteur, prévu sur le dispositif d'introduction pour décharger et/ou recevoir l'article (P) dans et à partir de, respectivement, la section de stockage sélectionnée (204a), en particulier dans et à partir d'un porteur dans la section de stockage sélectionnée, ledit dispositif de déplacement étant de préférence actif dans une direction horizontale transversalement à la direction longitudinale de la section de stockage, dans lequel, de préférence, le dispositif de déplacement se met en prise sur l'article.

3. Dispositif selon la revendication 1 ou 2, dans lequel les quatrièmes moyens de déplacement (280) sont capables de déplacer le dispositif d'introduction (205c) de haut en bas et/ou de façon réciproque le long du côté longitudinal jusqu'à un porteur sélectionné (206) dans une section de stockage sélectionnée (204a).

4. Dispositif selon l'une quelconque des revendications précédentes, dans lequel le dispositif est pourvu de plusieurs dispositifs d'introduction (205c) sur le même côté longitudinal, dans lequel les troisièmes et les quatrièmes moyens de déplacement (209c; 280) desdits dispositifs d'introduction peuvent être actionnés indépendamment les uns des autres.

5. Dispositif selon l'une quelconque des revendications précédentes, dans lequel, sur au moins un des côtés longitudinaux du cadre, les porteurs (206) sont librement accessibles à un article (P), dans lequel, de préférence, les porteurs sur les deux côtés longitudinaux du cadre sont librement accessibles à un article.

6. Dispositif selon l'une quelconque des revendications précédentes, dans lequel le premier côté longitudinal du cadre (202) forme le côté d'entrée, et le côté longitudinal opposé forme le côté de sortie.

7. Dispositif selon l'une quelconque des revendications précédentes, dans lequel, à une ou plusieurs station(s) de stockage, qui sont des stations de sortie ou de déchargement (204a; 204b), le dispositif est pourvu de cinquièmes moyens de déplacement (209d) pour enlever un article (P) de la section de stockage concernée, se présentant de préférence sous la forme d'un ou de plusieurs dispositif(s) de déplacement, tels que des éjecteurs, qui de préférence se mettent en prise sur l'article.

8. Dispositif selon la revendication 7, dans lequel les troisièmes moyens de déplacement (209c), les cinquièmes moyens de déplacement (209d), le dispositif d'introduction (205c) et un dispositif de sortie (260) sont conçus pour être actifs de manière inversée de telle sorte que le dispositif d'introduction forme un dispositif de sortie et que la section de décharge forme une section d'entrée.

9. Dispositif selon l'une quelconque des revendications précédentes, pourvu d'un système de commande programmable pour commander les premiers (203c), deuxièmes (12a, b), troisièmes (209c) et quatrièmes (280), et s'ils sont présents les cinquièmes (209d) moyens de déplacement, dans lequel le système de commande est de préférence programmé pour que les articles (P) soient déplacés exclusivement par la première plate-forme (205a) le long des extrémités des sections de stockage, et/ou le système de commande est programmé pour que la deuxième plate-forme (205b) déplace exclusivement des porteurs vides.

10. Procédé pour garder des articles stockés, dans lequel les articles (P) sont stockés dans un dispositif (201), dispositif qui comprend un cadre (202) présentant une première série de sections de stockage allongées (204) disposées parallèlement les unes aux autres, de préférence dans une disposition en colonnes, et s'étendant entre une première extrémité et une deuxième extrémité du cadre, comprenant en outre un nombre de porteurs (206) pour les articles, dans lequel les sections de stockage sont pourvues de supports de porteur (207) sur lesquels un nombre des porteurs peuvent être supportés pour le stockage des articles, **caractérisé en ce qu'**à un côté longitudinal du cadre, des articles sont emportés vers une section de stockage sélectionnée (204a) par un dispositif d'introduction mobile verticalement, en particulier vers un porteur sélectionné dans la section de stockage sélectionnée par un dispositif d'introduction mobile horizontalement et verticalement (205c), et sont fournis à celle-ci, dans une direction transversale à la direction longitudinale de la section de stockage, dans lequel, pour décharger du dispositif des articles stockés sélectionnés, les porteurs contenant ces articles sont déplacés jusqu'à une extrémité longitudinale du cadre et sont emportés à cet endroit par une plate-forme (205a; 205b) vers une section de stockage destinée au déchargement, c'est-à-dire une section de déchargement ou de sortie, et sont transférés à celle-ci, dans lequel les articles sont transférés de la section de décharge à un dispositif de sortie (260).

11. Procédé selon la revendication 10, dans lequel, à la première extrémité longitudinale et à la deuxième extrémité longitudinale du cadre (202), une première et une deuxième plates-formes mobiles (205a; 205b), respectivement, ont été agencées, dans lequel, pour récupérer les articles à partir du stock, la première plate-forme et la deuxième plate-forme sont emportées vers une section de stockage sélectionnée (204a), et un porteur vide (206) est reçu à partir de la deuxième plate-forme sur les supports de porteur (207) de ladite section de stockage tout en déchargeant un porteur contenant l'article de ladite section de stockage vers la première plate-forme, ensuite le porteur contenant l'article est emporté par la première plate-forme vers la section de décharge, où le porteur en question est reçu à partir de la première plate-forme sur les supports de porteur de la section de décharge tout en transférant un porteur vide depuis ladite même section à la deuxième plate-forme.

12. Procédé selon la revendication 10 ou 11, dans lequel, dans une direction transversale, plusieurs articles (P), de préférence identiques, sont placés les uns à côté des autres sur un porteur (206) dans la section de stockage sélectionnée (204a).

13. Procédé selon l'une quelconque des revendications 10 à 12, dans lequel les articles (P) sont déchargés de la section de décharge, de préférence dans une direction transversale à la direction longitudinale de la section de décharge, au moyen de dispositifs de déchargement (209d), tels que des éjecteurs, qui sont agencés dans le cadre actif à l'emplacement du porteur concerné, dans lequel, de préférence, le côté longitudinal de l'entrée est opposé au côté longitudinal de la décharge/sortie.

14. Procédé selon l'une quelconque des revendications 10 à 13, dans lequel les articles fournis sont placés dans différentes sections de stockage (204a), en particulier en fonction du type ou de l'utilisation prévue des articles, et/ou des articles provenant de différentes sections de stockage sont coriduits ensemble dans la section de décharge (204b).

15. Procédé pour garder des articles stockés, dans lequel les articles (P) sont stockés dans un dispositif (201), dispositif qui comprend un cadre (202) présentant une première série de sections de stockage allongées (204) disposées parallèlement les unes aux autres, de préférence dans une disposition en colonnes, et s'étendant entre une première extrémité et une deuxième extrémité du cadre, comprenant en outre un nombre de porteurs (206) pour les articles, dans lequel les sections de stockage sont pourvues de supports de porteur (207) sur lesquels un nombre des porteurs peuvent être supportés pour le stockage des articles, **caractérisé en ce qu'**à un côté longitudinal du cadre, les articles sont emportés vers une section de stockage conçue comme section d'entrée (204) et sont fournis à celle-ci, dans une direction transversale à la direction longitudinale de la section d'entrée, dans lequel pour stocker des articles entrés dans une section de stockage sélectionnée du dispositif, les porteurs contenant ces articles sont déplacés jusqu'à une extrémité longitudinale du cadre et à cet endroit sont emportés par une plate-forme (205a, 205b) vers la section de stockage sélectionnée et sont transférés à celle-ci, les articles sont transférés de la section de stockage à un dispositif de sortie dans une direction transversale à la direction longitudinale de la section de stockage, dans lequel le dispositif de sortie est déplacé verticalement et/ou horizontalement le long des sections de stockage, entre une position sélectionnée pour la réception d'un article et un endroit de sortie.
